# EUROPÄISCHE PATENTSCHRIFT

(11) **EP 3 139 103 B1**
(45) Veröffentlichungstag und Bekanntmachung des Hinweises auf die Patenterteilung: **01.05.2019**
(21) Anmeldenummer: 16178075.4
(22) Anmeldetag: 06.07.2016
(51) Int. Cl.: F24D 19/10

(54) **VERFAHREN ZUM BEREITSTELLEN VON WARMEM TRINKWASSER**
METHOD FOR PROVIDING WARM DRINKING WATER
PROCÉDÉ DE PRÉPARATION DE BOISSONS CHAUDES

(30) Priorität: 01.09.2015 DE 102015216650
(43) Veröffentlichungstag der Anmeldung: 08.03.2017
(73) Patentinhaber: ROBERT BOSCH GMBH, 70442 Stuttgart (DE)
(72) Erfinder: Stumpp, Hermann, 73730 Esslingen (DE); Senn, Matthias, 73249 Wernau (DE)

(56) Entgegenhaltungen:
- DE-A1- 3 126 392
- DE-A1- 3 312 479
- DE-A1- 3 917 068
- DE-A1- 19 617 111

## Beschreibung

Die Erfindung betrifft ein Verfahren zum Bereitstellen von warmem Wasser, gemäß dem Oberbegriff des Anspruchs 1. Solch ein Verfahren ist zum Beispiel aus der DE 39 17 068 A1 bekannt.

### Stand der Technik

Für die Warmwasseraufbereitung ist es bekannt, Wasser in einem Primärkreis durch einen Wärmeerzeuger zu erwärmen, welches zur Erwärmung von durch einen Wärmeübertrager fließendem, kaltem Trinkwasser in einem Sekundärkreis verwendet wird. Ist ein Warmwasserspeicher vorgesehen, so ist das erwärmte Trinkwasser darin speicherbar. Bei einer Zapfanforderung ist dem Warmwasserspeicher warmes Trinkwasser entnehmbar. Zur Zirkulation des Wassers im Primärkreis und des Trinkwassers im Sekundärkreis ist jeweils eine Pumpe vorgesehen. Um das kalte Trinkwasser auf Wunschtemperatur zu bringen, wird üblicherweise die Leistung des Wärmeerzeugers, die Drehzahl der Pumpe im Primärkreis und/oder die Drehzahl der Pumpe im Sekundärkreis geregelt.

Es soll ein verbessertes und mit Hinsicht auf Effizienz und Komfort optimiertes Verfahren zur Warmwasseraufbereitung bereitgestellt werden.

### Offenbarung der Erfindung

Diese Aufgabe wird durch das erfindungsgemäße Verfahren zum Bereitstellen von warmem Wasser, insbesondere von warmem Trinkwasser, mit einer Warmwasseraufbereitungsanlage gemäß Anspruch 1 gelöst. Die Warmwasseraufbereitungsanlage weist mindestens einen Wärmeerzeuger und mindestens eine erste Pumpe zur Zirkulation eines Fluids, insbesondere von Wasser, in mindestens einem Primärkreis und mindestens einen Warmwasserspeicher und mindestens eine zweite Pumpe zur Zirkulation eines Fluids, insbesondere von Wasser, insbesondere von Trinkwasser, in mindestens einem Sekundärkreis auf, wobei zwischen dem Wärmeerzeuger und dem Warmwasserspeicher mindestens ein Wärmeübertrager angeordnet ist. Mit der ersten Pumpe wird das Fluid durch eine Primärseite des Wärmeübertragers gepumpt. Mit der zweiten Pumpe wird das Fluid durch den Warmwasserspeicher und durch eine Sekundärseite des Wärmeübertragers gepumpt. Die Drehzahl mindestens einer der Pumpen wird geregelt. Das Verfahren zeichnet sich dadurch aus, dass ein Ist-Wert der Temperatur am sekundärseitigen Ausgang des Wärmeübertragers ermittelt wird. Ein Warmwasserspeicher-Sollwert für eine Temperatur des Warmwasserspeichers wird für eine Regelungsstrategie vorgegeben oder unter Berücksichtigung einer Regelungsstrategie berechnet. Die Drehzahl der mindestens einen regelbaren Pumpe wird, insbesondere anhand der Regelungsstrategie, derart geregelt, dass der Ist-Wert höher oder gleich dem Warmwasserspeicher-Sollwert ist, wobei die mindestens eine Pumpe bei Bedarf mit reduzierter Drehzahl betrieben wird.

Unter einem Wärmeerzeuger wird ein Gerät verstanden, das Wärme erzeugen kann, wobei die Wärme auf ein Wärmeträgermedium, wie Gas, ein Fluid oder dergleichen, übertragbar ist. Beispiele sind ein Gas- oder Ölbrenner, eine Solaranlage, eine Wärmepumpe oder ein Pelletofen. Dabei wird oftmals Wasser als das wärmeübertragende Medium verwendet. Statt eine Wärmeerzeugers kann jedoch in gleicher Weise ein Kälteerzeuger eingesetzt werden, wie beispielsweise Klimatisierungsgeräte.

Ein Warmwasserspeicher ist ein Behältnis, welches einen Stoff, insbesondere ein Fluid, wie beispielsweise Trinkwasser oder Brauchwasser, aufnehmen kann. Unter Trinkwasser wird hier Wasser für den menschlichen Bedarf verstanden, beispielsweise zum Trinken, zum Spülen oder zum Waschen. Üblicherweise wird in dem Warmwasserspeicher warmes Trinkwasser gespeichert, welches bei Bedarf bereitgestellt wird.

Ein Wärmeübertrager, oder auch Wärmetauscher genannt, ist eine Einheit, mit welcher thermische Energie von einem Stoffstrom auf einen anderen übertragen wird. Oftmals wird ein Fluid, wie beispielsweise Wasser, verwendet, das den Wärmeübertrager durchströmt. Unter den Begriff Wärmeübertrager werden auch Einheiten subsumiert, die einen Wärmeübertrager aufweisen, wie beispielsweise Frischwasserstationen.

Der Wärmeübertrager und der Warmwasserspeicher können auch als eine Einheit verbaut sein, beispielsweise in Form einer Frischwasserstation.

Um den Energieverbrauch weiter zu optimieren, besteht die erfindungsgemäße Regelungsstrategie darin, in Abhängigkeit des Ist-Werts der Temperatur am sekundärseitigen Ausgang des Wärmeübertragers und des Warmwasserspeicher-Sollwerts ein Signal bereitzustellen, anhand welchem entschieden wird, ob die Drehzahl der mindestens einen Pumpe reduziert wird. Dadurch wird erreicht, dass die mindestens eine Pumpe nur mit der Drehzahl betrieben wird, die nötig ist, um das Wasser auf eine gewünschte Temperatur zu erwärmen, wobei unnötig hohe Drehzahlen vermieden werden können.

Weiterhin besteht die erfindungsgemäße Regelungsstrategie darin, dem Signal einen ersten, insbesondere positiven, Wert zuzuweisen, wenn der Ist-Wert größer als der Warmwasserspeicher-Sollwert ist, und dem Signal einen vom ersten verschiedenen zweiten, insbesondere negativen, Wert zuzuweisen, wenn der Ist-Wert kleiner als der Warmwasserspeicher-Sollwert ist.

Die erfindungsgemäße Regelungsstrategie besteht weiterhin darin, den Wärmeerzeuger auszuschalten, wenn der Wert des Signals eine positive obere Grenze, insbesondere +1, erreicht oder überschreitet. Die Drehzahl der mindestens eine Pumpe wird dann weiterhin derart geregelt, dass der Ist-Wert höher oder gleich dem Warmwasserspeicher-Sollwert ist. Sobald der Wert des Signals eine negative untere Grenze, insbesondere -1, erreicht oder unterschreitet, wird mindestens eine der Pumpen mit reduzierter Drehzahl betrieben.

Anhand des Signals kann so direkt erkannt werden, in welchem Modulationspunkt die Pumpen sich befinden, wodurch die Modulationsbreite der Pumpen voll ausgenutzt werden kann. Der Wärmeerzeuger kann durch Verwendung des Signals hierbei früher abgeschaltet werden, wobei die Restwärme des Wärmeerzeugers weiterhin zur Beladung des Warmwasserspeichers genutzt werden kann.

Die erste Pumpe wird mit reduzierter Drehzahl betrieben, wenn das Signal dem ersten, insbesondere positiven, Wert entspricht, und die zweite Pumpe wird mit reduzierter Drehzahl zu betrieben, wenn das Signal dem zweiten, insbesondere negativen, Wert entspricht. Dies hat den Vorteil, dass die Drehzahlen der Pumpen den Anforderungen entsprechend angepasst werden können, wobei eine hohe Energieeffizienz beibehalten wird.

Dies kann noch weiter verbessert werden, indem die erste Pumpe mit einer reduzierten, insbesondere einer minimalen, Drehzahl und die zweite Pumpe mit einer erhöhten, insbesondere einer maximalen, Drehzahl betrieben werden, wenn der Wert des Signals die positive obere Grenze erreicht oder überschreitet, das heißt, wenn der Ist-Wert der Temperatur am sekundärseitigen Ausgang des Wärmeübertragers größer als der Warmwasserspeicher-Sollwert ist. Wenn der Wert des Signals die negative untere Grenze erreicht oder unterschreitet, wenn also der Warmwasserspeicher-Sollwert noch nicht erreicht ist, werden die erste Pumpe mit einer erhöhten, insbesondere mit einer maximalen, Drehzahl und die zweite Pumpe mit einer reduzierten, insbesondere einer minimalen, Drehzahl betrieben.

Ein weiterer Vorteil besteht darin, dass durch die Regelung der Pumpendrehzahlen auch der Betrieb des Wärmeerzeugers optimiert werden kann, indem ein Wärmeerzeuger-Sollwert, insbesondere eine Solltemperatur, für den Wärmeerzeuger bestimmt wird, wobei der Wärmeerzeuger-Sollwert aus dem Warmwasserspeicher-Sollwert und einem festlegbaren Wert gebildet wird. Der festlegbare Wert ist abhängig von dem Signal. Insbesondere wird der Wärmeerzeuger-Sollwert aus der Summe des Warmewasserspeicher-Sollwerts und des festlegbaren Werts gebildet. Dieser Weiterentwicklung des erfindungsgemäßen Verfahrens liegt die Erkenntnis zugrunde, dass bei niedrigerer Rücklauftemperatur der Wärmeerzeuger effizienter betrieben werden kann, beispielsweise in einem kondensierenden Bereich. Dies ist vorteilhaft, da der gesamte Leistungsbereich des Wärmeerzeugers genutzt werden kann, ohne den Wärmeerzeuger zu takten, was ineffizient ist und die Dauer der Speicherladung unnötig verlängert.

Dabei ist es vorteilhaft, wenn der der festlegbare Wert, welcher zur Bestimmung des Wärmeerzeuger-Sollwerts mit herangezogen wird, konstant, insbesondere maximal, ist, wenn das Signal den zweiten, insbesondere negativen, Wert annimmt. Der festlegbare Wert wird erniedrigt, insbesondere linear erniedrigt, wenn das Signal den ersten, insbesondere positiven, Wert annimmt.

Es ist von Vorteil, wenn durch das Verfahren eine effizientere Schichtung des Warmwasserspeichers erreicht werden kann, ohne dass Komfort eingebüßt werden muss. Hierbei kann eine Schichtgrenze, welche üblicherweise zwischen kaltem und warmem Wasser entsteht, in einem unteren Bereich des Warmwasserspeichers gehalten werden. Dafür wird ein Ist-Wert des Warmwasserspeichers, insbesondere ein Ist-Wert einer Temperatur, in einem unteren Bereich des Warmwasserspeichers ermittelt. Schließlich wird die Drehzahl mindestens einer der Pumpen solange erhöht, bis der Ist-Wert einen festlegbaren, weiteren Warmwasserspeicher-Sollwert, insbesondere eine Soll-Temperatur, für den unteren Bereich des Warmwasserspeichers erreicht oder überschreitet. Hiermit wird erreicht, dass der Warmwasserspeicher nur so schnell beladen wird, wie es notwendig ist, was zu einer effizienteren Beladung des Speichers führt.

Zur weiteren Erhöhung der Effizienz und des Komforts kann die Drehzahl mindestens einer der Pumpen anhand ihrer maximalen Drehzahl und eines vorgebbaren skalierenden Faktors bestimmt werden, welcher insbesondere Werte zwischen 0% und 100% annimmt. Insbesondere entspricht die bestimmte Drehzahl der maximalen Drehzahl, wenn der skalierende Faktor den Wert 0% annimmt; die bestimmte Drehzahl ist kleiner als die maximale Drehzahl, wenn der skalierende Faktor größer als 0% ist. Dieser Ausgestaltung liegt die Erkenntnis zugrunde, dass eine geringere Drehzahl der ersten Pumpe zu einem geringeren Wasservolumenstrom im Primärkreis führt, welches effizienzsteigernde Effekte nach sich zieht. Weiter kann die maximale Leistung des Wärmeerzeugers reduziert werden, wodurch sich die Effizienz der Verbrennung erhöht, da das Abgas des Wärmeerzeugers besser auf die Rücklauftemperatur abgekühlt werden kann. Dadurch nimmt auch die mittlere Temperaturdifferenz zwischen Primär- und Sekundärkreis im Wärmeübertrager ab, wodurch sich die Rücklauftemperatur zum Wärmeerzeuger verringert. Auch dies führt zu einer weiteren Abkühlung des Abgases. Weiter führt ein Volumenstrom im Primärkreis, der relativ zum Volumenstrom im Sekundärkreis geringer ist, dazu, dass die Rücklauftemperatur des Wärmeerzeugers schneller auf die kalte Trinkwassertemperatur im Sekundärkreis abkühlt, was einen weiteren effizienzsteigernden Effekt darstellt.

### Zeichnung

In den Figuren ist eine schematische Darstellung einer erfindungsgemäßen Warmwasseraufbereitungsanlage zu sehen, welche mit dem erfindungsgemäßen Verfahren betrieben wird, sowie das erfindungsgemäße Verfahren, welches in der folgenden Beschreibung näher dargelegt wird. Es zeigen
- Figur 1: eine Warmwasseraufbereitungsanlage,
- Figur 2: ein Verfahren in einem Flussdiagramm,
- Figur 3: ein erfindungsgemäßes Verfahren,
- Figur 4: ein Ausführungsbeispiel zur Bestimmung einer Pumpendrehzahl innerhalb des Verfahrens,
- Figur 5: ein Ausführungsbeispiel zur Bestimmung eines Wärmeerzeuger-Sollwertes innerhalb des Verfahrens,
- Figur 6: ein weiteres Ausführungsbeispiel zur Bestimmung einer Pumpendrehzahl.

### Beschreibung der Zeichnungen

In den Figuren sind gleichen Baukomponenten gleiche Bezugszahlen zugeordnet.

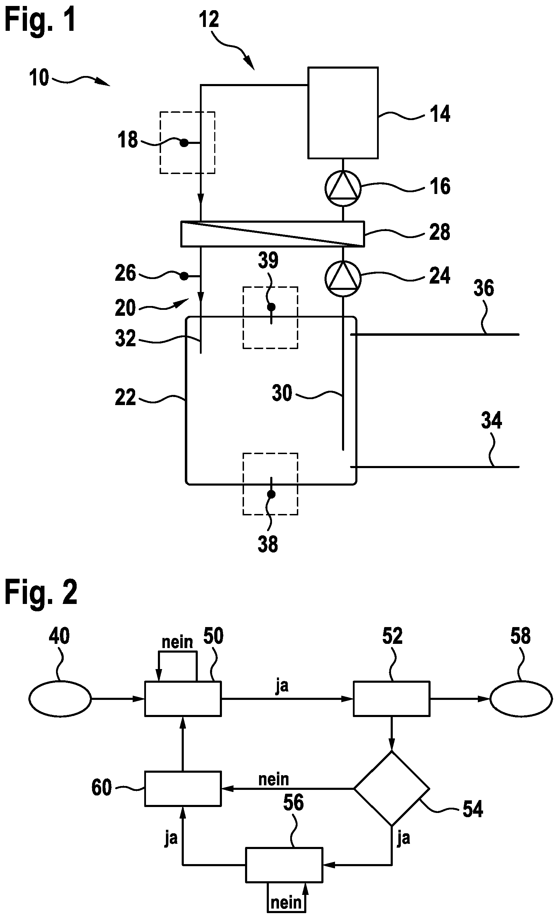

Figur 1 zeigt ein Ausführungsbeispiel einer Warmwasseraufbereitungsanlage 10. Diese weist einen Primärkreis 12 auf, in welchem sich ein Wärmeerzeuger 14 und eine erste Pumpe 16, beispielsweise eine Zirkulationspumpe, zum Zirkulieren eines Fluids befinden. Bei dem Wärmeerzeuger 14 handelt es sich beispielsweise um ein Gas-Brennwertgerät. In dem Primärkreis 12 zirkuliert ein Fluid, in diesem Fall handelt es sich um Wasser, insbesondere Heizwasser, welches durch den Wärmeerzeuger 14 erwärmt wird. Weiter weist die Warmwasseraufbereitungsanlage 10 einen Sekundärkreis 20 auf, in welchem sich ein Warmwasserspeicher 22, eine zweite Pumpe 24 zur Zirkulation von Trinkwasser und ein erster Temperatursensor 26 befinden. Zwischen dem Wärmeerzeuger 14 und dem Warmwasserspeicher 22 ist ein Wärmeübertrager 28 angeordnet. Der Wärmeübertrager 28 ist mit einem Eingang 30 und einem Ausgang 32 verbunden. Der Eingang 30 verläuft bis zum unteren Ende des Warmwasserspeichers 22, der Ausgang 32 verläuft bis zum oberen Bereich des Warmwasserspeichers 22, wobei über den Eingang 30 kaltes Trinkwasser vom Warmwasserspeicher 22 zum Wärmeübertrager 28 und über den Ausgang 32 erwärmtes Trinkwasser vom Wärmeübertrager 28 zum Warmwasserspeicher 22 geleitet werden. Am unteren Ende des Warmwasserspeichers 22 befindet sich eine Zulaufleitung 34 für kaltes Trinkwasser, am oberen Ende befindet sich eine Zapfleitung 36 für warmes Trinkwasser.

Durch diese Anordnung entsteht eine Schichtung im Warmwasserspeicher 22. Im oberen Bereich befindet sich warmes Trinkwasser, im unteren Bereich kaltes. In den unteren Bereich wird über die Zulaufleitung 34 kaltes Wasser eingeschichtet, über den Ausgang 32 wird der Warmwasserspeicher 22 mit warmem Wasser beladen, welches über die Zapfleitung 36 abgeführt wird. Die Temperatur für das Warmwasser ist dabei vorgegeben und wird als Warmwasserspeicher-Sollwert 40 bezeichnet. Die Temperatur im oberen Bereich des Warmwasserspeichers 22 wird möglichst konstant gehalten. Hierfür muss die Temperatur des Wassers im Ausgang des Wärmeübertragers 28, welche über den zweiten Temperatursensor 26 erfasst wird, über die Zeit der Beladung hinweg konstant dem Warmwasserspeicher-Sollwert 40 entsprechen. Die Temperatur am zweiten Temperatursensor 26 wird durch die Leistung des Wärmeerzeugers 14, der Drehzahl der ersten Pumpe 16 und der Drehzahl der zweiten Pumpe 24 beeinflusst.

Optional kann sich ein zweiter Temperatursensor 18 im Primärkreis 12 und/oder ein dritter Temperatursensor 38 im unteren Bereich des Warmwasserspeichers 22 und/oder ein vierter Temperatursensor 39 im oberen Bereich des Warmwasserspeichers 22 befinden. Dies ist durch einen gestrichelten Kasten dargestellt. Der vierte Temperatursensor 39 und/oder der dritte Temperatursensor 38 kann beispielsweise zur Bestimmung des Startpunkts der Beladung des Warmwasserspeichers 22 und/oder für eine optimiertere Umschichtung des Wassers im Warmwasserspeicher 22 herangezogen werden. Letzteres wird weiter unten beschrieben. Wenn nichts anderes beschrieben ist, wird nur der erste Temperatursensor 26 für das Verfahren verwendet.

Alternativ kann ein Temperatursensor mittig im Warmwasserspeicher 22 angeordnet sein, welcher den dritten Temperatursensor 38 und/oder den vierten Temperatursensor 39 ersetzt oder welcher zusätzlich zu diesen angebracht ist. Dies wird in Figur 1 der Übersicht halber nicht gezeigt.

Anhand Figur 2 wird nun ein Verfahren zum Bereitstellen von warmem Trinkwasser in der Warmwasseraufbereitungsanlage 10 beschrieben.

Zu Beginn wird der Warmwasserspeicher-Sollwert 40, insbesondere eine Solltemperatur, vorgegeben. Dieser richtet sich vorwiegend nach den Bedürfnissen des Verbrauchers sowie den Eigenheiten einer heimischen Anlage.

In Schritt 50 ist der Wärmeerzeuger 14 nicht in Betrieb. In regelmäßigen Abständen wird abgefragt, ob eine Warmwasseranforderung vorliegt. Liegt keine Anforderung vor, bleibt das Verfahren in Schritt 50 zurück, anderweitig wird es in Schritt 52 fortgesetzt.

In Schritt 52 wird eine Ist-Temperatur am ersten Temperatursensor 26 gemessen und als ein Ist-Wert 58 abgespeichert.

In Schritt 54 wird abgefragt, ob der Ist-Wert 58 am ersten Temperatursensor 26 kleiner dem Warmwasserspeicher-Sollwert 40 ist. Ist dem so, so geht das Verfahren zu Schritt 56, anderweitig zu Schritt 60.

In Schritt 56 wird der Wärmeerzeuger 14 aufgrund eines Wärmebedarfs gestartet. Die Drehzahl der ersten Pumpe 16 wird auf einen bestimmbaren Wert erhöht. Die Höhe der Drehzahl ist unter anderem abhängig von der Abweichung des gemessenen Ist-Werts 58 von dem Warmwasserspeicher-Sollwert 40. Die zweite Pumpe 24 wird noch nicht in Betrieb genommen oder mit einer geringen Drehzahl betrieben. Weiter wird in regelmäßigen Abständen abgefragt, ob der Ist-Wert 58 am ersten Temperatursensor 26 am sekundärseitigen Ausgang 32 des Wärmeübertragers 28 höher oder gleich dem Warmwasserspeicher-Sollwert 40 ist. In diesem Fall wird das Verfahren in Schritt 60 fortgesetzt. Ansonsten bleibt es in Schritt 56, wo das Fluid weiter erwärmt wird, bevor es in den Warmwasserspeicher 22 geleitet werden kann.

In Schritt 60 wird die Beladung des Warmwasserspeichers 22 mit dem durch den Wärmeübertrager 28 erwärmten Wasser gestartet. Die Drehzahl der zweiten Pumpe 24 wird erhöht, während die Drehzahl der ersten Pumpe 16 reduziert wird.

Daraufhin kehrt das Verfahren zu Schritt 50 zurück, wo überprüft wird, ob der Warmwasserspeicher 22 aufgrund eines weiteren Wärmebedarfs weiterhin beladen wird.

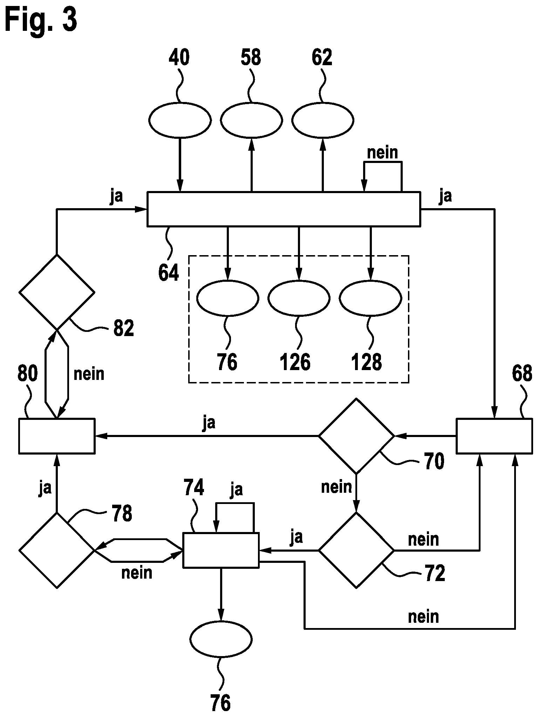

Figur 3 zeigt ein erfindungsgemäßes Verfahren, welches im Folgenden näher beschrieben wird. Hierfür wird vorausgesetzt, dass der Warmwasserspeicher 22 im oberen Bereich den vierten Temperatursensor 39 aufweist. Alternativ ist der vierte Temperatursensor 39 im mittleren Bereich des Warmwasserspeichers 22 angeordnet.

Zu Beginn wird der Warmwasserspeicher-Sollwert 40 festgelegt.

In Schritt 64 wird wie in Schritt 50 der Wärmeerzeuger 14 nicht betrieben. Es besteht keine Wärmeanforderung oder die Wärmeanforderung wurde bereits erfüllt. Der Ist-Wert 58 am ersten Temperatursensor 26 wird gemessen und gespeichert. Ein Ist-Wert 62, insbesondere eine Ist-Temperatur, am vierten Temperatursensor 39 wird gemessen und gespeichert. Alternativ oder zugleich wird eine Ist-Temperatur am zweiten Temperatursensor 18 gemessen.

Weiter wird in regelmäßigen Abständen abgefragt, ob der Ist-Wert 62 am vierten Temperatursensor 39 kleiner als der Warmwasserspeicher-Sollwert 40 ist. Alternativ oder zugleich wird die Ist-Temperatur am zweiten Temperatursensor 18 verwendet. Üblicherweise wird hier eine Hysterese beachtet, um später während des Betriebs des Wärmeerzeugers 14 eine Taktung zu vermeiden. Anhand dieser Abfrage kann auch festgestellt werden, ob eine Wärmeanforderung vorliegt oder nicht. Ergibt die Abfrage, dass der Ist-Wert 62 am vierten Temperatursensor 39 kleiner als der Warmwasserspeicher-Sollwert 40 ist, wird das Verfahren in Schritt 68 fortgesetzt. Anderweitig bleibt das Verfahren in Schritt 64.

Schritt 68 dient der Vorbereitung der Beladung des Warmwasserspeichers 22 mit warmem Wasser. Der Wärmeerzeuger 14 wird gestartet und die Drehzahl der ersten Pumpe 16 wird erhöht, während die Drehzahl der zweiten Pumpe 24 reduziert oder die zweite Pumpe 24 nicht in Betrieb ist.

In Schritt 70 wird abgefragt, ob der Ist-Wert 62 am vierten Temperatursensor 39 im oberen Bereich des Warmwasserspeichers 22 größer oder gleich dem Warmwasserspeicher-Sollwert 40 ist. Ist dies der Fall, so ist eine Beladung des Warmwasserspeiches 22 mit warmem Wasser nicht notwendig, und das Verfahren wird in Schritt 78 fortgesetzt. Anderweitig wird Schritt 72 ausgeführt.

In Schritt 72 wird abgefragt, ob der Ist-Wert 58 am ersten Temperatursensor 26 am sekundärseitigen Ausgang 32 des Wärmeübertragers 28 höher oder gleich dem Warmwasserspeicher-Sollwert 40 ist. Ist dem so, wird das Verfahren in Schritt 74 fortgesetzt, sonst kehrt es zu Schritt 68 zurück, wo es weiter auf Warmwasserspeicher-Sollwert 40 erwärmt wird.

In Schritt 74 wird die Beladung des Warmwasserspeichers 22 mit dem erwärmten Fluid gestartet, da das Fluid nun mindestens die Temperatur des Warmwasserspeicher-Sollwertes 40 hat. Hierfür wird die Drehzahl der zweiten Pumpe 24 erhöht. Hierbei wird in regelmäßigen Abständen abgefragt, ob der Ist-Wert 58 am ersten Temperatursensor 26 weiterhin größer als der Warmwasserspeicher-Sollwert 40 ist. In diesem Fall wird der Speicher 22 weiterhin beladen, das heißt, das Verfahren bleibt in Schritt 74. Sinkt der Ist-Wert 58 unter den Warmwasserspeicher-Sollwert 40, wobei hierbei eine Hysterese beachtet werden kann, so kehrt das Verfahren zu Schritt 68 zurück.

In Schritt 74 wird auch ein Signal 76 berechnet, wobei das Signal 76 in diesem Ausführungsbeispiel abhängig von der Differenz zwischen dem Ist-Wert 58 am Ausgang 32 des Wärmeübertragers 28 und dem Warmwasserspeicher-Sollwert 40 ist. Ist der Ist-Wert 58 größer oder gleich dem Warmwasserspeicher-Sollwert 40, so wird dem Signal 76 ein erster Wert zugewiesen. In diesem Beispiel handelt es sich bei dem ersten Wert um eine positive Zahl. Ist der Ist-Wert 58 kleiner als der Warmwasserspeicher-Sollwert 40, so wird dem Signal 76 ein zweiter Wert zugewiesen, welcher verschieden vom ersten Wert ist. In diesem Beispiel handelt es sich bei dem zweiten Wert um eine negative Zahl. Dabei wird dem ersten Wert eine obere Grenze zugewiesen, welche größer als der erste Wert ist. In diesem Ausführungsbeispiel ist die obere Grenze eine positive Zahl, beispielsweise +1. Eben dasselbe gilt für den zweiten Wert, welchem eine untere Grenze zugewiesen wird. In diesem Beispiel ist dies eine negative Zahl, beispielsweise -1.

Die Drehzahl der Pumpe 16, 24 korreliert mit der Temperatur des zirkulierenden Wassers bzw. mit der Differenz zwischen dem Ist-Wert 58 und dem Warmwasserspeicher-Sollwert 40. Falls der zweite Temperatursensor 18 verwendet wird, so kann die Differenz zwischen dem Ist-Wert am zweiten Temperatursensor 18 und dem Warmwasserspeicher-Sollwert 40 herangezogen werden. Ist der Ist-Wert 58 kleiner als der Warmwasserspeicher-Sollwert 40, ist das Signal 76 negativ. Mit sinkendem Signal 76 wird die Drehzahl der ersten Pumpe 16 erhöht, bis sie gegebenfalls ihr Maximum erreicht, während die Drehzahl der zweiten Pumpe 24 reduziert wird, gegebenfalls bis sie ihre minimale Drehzahl erreicht. Erreicht der erste Wert des Signals 76 die obere Grenze, beispielsweise +1, wird eine minimale Drehzahl der ersten Pumpe 16 eingestellt, während die zweite Pumpe 24 mit ihrer maximalen Drehzahl betrieben wird. Erreicht der zweite Wert des Signals 76 die untere Grenze, insbesondere -1, wird für die erste Pumpe 16 eine maximale Drehzahl und für die zweite Pumpe 24 eine minimale Drehzahl vorgegeben.

In Schritt 78 wird in regelmäßigen Abständen das Signal 76 und der Ist-Wert 62 am vierten Temperatursensor 39 im oberen Bereich des Warmwasserspeichers 22 abgefragt. Erreicht der erste Wert des Signals 76 die obere Grenze, hier +1, und/oder ist der Ist-Wert 62 am Temperatursensor 39 im oberen Bereich des Warmwasserspeichers 22 größer als der Warmwasserspeicher-Sollwert 40, wird das Verfahren in Schritt 80 fortgesetzt. In diesem Fall wird die erste Pumpe 16 mit minimaler Drehzahl und die zweite Pumpe 24 mit maximaler Drehzahl betrieben. Der Ist-Wert 58 am vierten Temperatursensor 26 lässt sich nicht weiter über die Drehzahlen der Pumpen 16, 24 beeinflussen. Anderweitig, falls das Signal 76 nicht die obere Grenze, hier +1, erreicht, bleibt das Verfahren in Schritt 74.

In Schritt 80 wird ein Nachlauf durchgeführt. Die Drehzahl der ersten Pumpe 16 ist niedrig oder minimal, die Drehzahl der zweiten Pumpe 24 ist hoch oder maximal, das Sigmal 56 ist positiv. Der Wärmeerzeuger 14 wird abgeschaltet. Die Restwärme wird noch verwendet, um den Warmwasserspeicher 22 weiter mit warmem Wasser auf Soll-Temperatur 40 zu beladen. Hierfür wird das Signal 76 schrittweise erniedrigt, bis es negativ ist. Solange das Signal 76 positiv ist, wird die erhöhte Drehzahl der zweiten Pumpe 24 so lange konstant gehalten und die Drehzahl der ersten Pumpe 16 so lange gesteigert, bis das Signal 76 negativ wird. Dann wird die Drehzahl der ersten Pumpe 16 konstant gehalten, während die Drehzahl der zweiten Pumpe 26 reduziert wird. Erreicht der Wert des Signals 56 die untere Grenze, hier -1, werden die erste Pumpe 16 mit einer hohen, bei Bedarf mit der maximalen, Drehzahl und die zweite Pumpe 24 mit einer reduzierten, bei Bedarf mit ihrer minimalen, Drehzahl betrieben.

Während des Nachlaufs in Schritt 80 kühlt der Wärmeerzeuger 14 aus. Die erste und die zweite Pumpe 16, 24 werden aber weiterhin derart geregelt, dass der Ist-Wert 58 konstant auf dem Warmwasserspeicher-Sollwert 40 gehalten wird. Dies ist so lange möglich, wie ausreichend Wärme vorhanden ist. Sinkt der Ist-Wert 58 am Temperatursensor 26 am Ausgang 32 des Wärmeübertragers 28 unter den Soll-Wert 40 für den Warmwasserspeicher 22, wird die Beladung beendet. Dies wird in Schritt 82 überprüft.

In Schritt 82 wird das Signal 76 abgefragt. Erreicht der Wert des Signals 76 die untere Grenze, hier -1, und/oder ist der Ist-Wert 58 am ersten Temperatursensor 26 kleiner als der Warmwasserspeicher-Sollwert 40, wird die Beladung beendet. Der Ist-Wert 58 ist nun kleiner als der Warmwasserspeicher-Sollwert 40. Das Verfahren gelangt wieder zu Schritt 64.

In Schritt 64 wird aufgrund des Signals 76, welches die untere Grenze -1 erreicht hat, die erste Pumpe 16 und/oder die zweite Pumpe 26 abgeschaltet. Die Beladung ist beendet. Es wird abgefragt, ob eine weitere Wärmeanforderung anliegt.

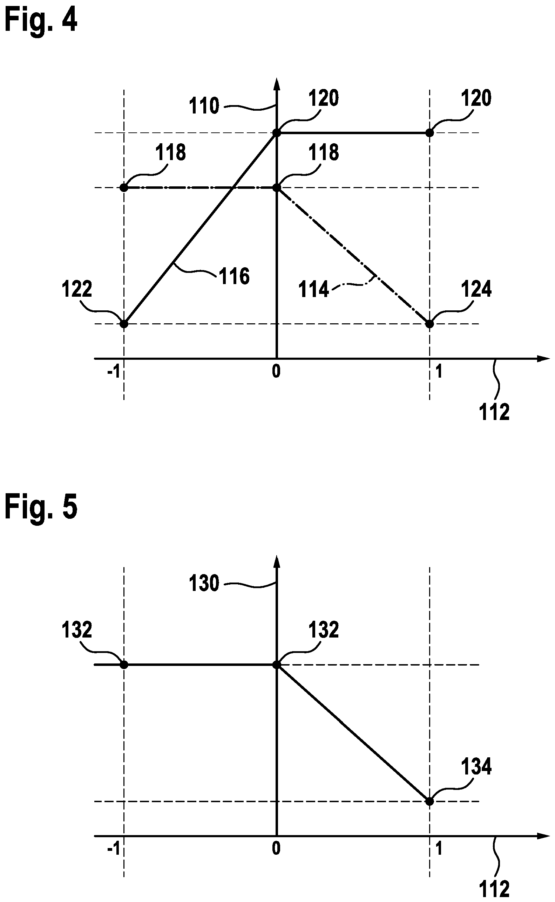

Anhand Figur 4 wird ein Ausführungsbeispiel zur Bestimmung der Drehzahlen der ersten und zweiten Pumpe 16, 24 in Abhängigkeit von dem Signal 76 beschrieben, wobei ein Schaubild dargestellt ist, bei dem die Pumpendrehzahl auf einer y-Achse 110 über dem Signal 76 auf der x-Achse 112 aufgetragen ist. Es wird angenommen, dass das Signal 76 wie im Ausführungsbeispiel von Figur 3 Werte zwischen der unteren Grenze und der oberen Grenze, also zwischen -1 und +1, annimmt.

Der Graph 114 repräsentiert die Drehzahl der ersten Pumpe 16, der Graph 116 die Drehzahl der zweiten Pumpe 24.

Im Bereich -1 < Signal < 0 (siehe x-Achse 112) wird die Drehzahl der ersten Pumpe 16 auf einem maximalen Wert 118 konstant eingestellt und gehalten, während die Drehzahl der zweiten Pumpe 24 mit sinkendem Signal von einem Maximum 120 linear auf ein Minimum 120 reduziert wird. Das Maximum 118 der Drehzahl der ersten Pumpe 16 ist im Beispiel ungleich dem Maximum 120 der Drehzahl der zweiten Pumpe 24. Sie können aber auch gleich sein (dies wird aus Gründen einer guten Darstellung nicht gezeigt).

Im Bereich 0 < Signal < 1 (siehe x-Achse 112) wird die Drehzahl der zweiten Pumpe 24 auf ihrem maximalen Wert 120 konstant eingestellt und gehalten, während die Drehzahl der ersten Pumpe 16 mit steigendem Signal von ihrem Maximum 118 linear auf ein Minimum 124 reduziert wird.

Die Reduktion der Drehzahl ist hier linear. Selbstverständlich sind andere Formen der Reduktion denkbar, wie beispielsweise eine stufenweise oder anderweitig nichtlineare Reduktion.

Innerhalb des Verfahrens kann ein Wärmeerzeuger-Sollwert 126, insbesondere eine Solltemperatur, für den Wärmeerzeuger 14 analog zur Drehzahl der Pumpe 16, 24 angepasst werden. Hierfür werden der Warmwasserspeicher-Sollwert 40 und ein festlegbarer Wert 128 herangezogen. Der festlegbare Wert 128 ist dabei abhängig vom Signal 76.

Anhand des Verfahrens von Figur 3 wird die Bestimmung des Wärmeerzeuger-Sollwerts 126 näher erläutert.

Der Wärmeerzeuger-Sollwert 126 wird in Schritt 64 berechnet. Dies ist in Figur 3 anhand des gestrichelten Kastens dargestellt. Hierfür wird das Signal 76 bereits in Schritt 64 bestimmt, wie es in Schritt 74 geschildert wurde: Ist der Ist-Wert 58 größer oder gleich dem Warmwasserspeicher-Sollwert 40, so wird dem Signal 76 ein positiver, erster Wert zugewiesen. Ist der Ist-Wert 58 kleiner als der Warmweasserspeicher-Sollwert 40, wird dem Signal 76 ein negativer, zweiter Wert zugewiesen, welcher verschieden vom ersten Wert ist. Weiter wird als obere Grenze +1 und als untere Grenze -1 vorgegeben. Weiter wird der festlegbare Wert 128 bestimmt. Der Wärmeerzeuger-Sollwert 126 wird in diesem Ausführungsbeispiel dann aus der Summe des Warmwasserspeicher-Sollwerts 40 und des festlegbaren Werts 128 bestimmt.

Ein Ausführungsbeispiel der Bestimmung des festlegbaren Werts 128 wird in Figur 5 veranschaulicht. Hier wird der festlegbare Wert 128 in Abhängigkeit vom Signal 76 gezeigt. Auf der x-Achse 112 aufgetragen ist das Signal 76, auf der y-Achse 130 ist der festlegbare Wert 128 aufgetragen. Falls das Signal 76 negativ ist, das heißt, falls der Ist-Wert 58 am sekundärseitigen Ausgang 32 des Wärmeübertragers 28 kleiner als der Warmwasserspeicher-Sollwert 40 ist, wird ein konstant hoher, insbesondere ein maximaler, festlegbarer Wert 132 gewählt. Dieser Vorgehensweise liegt die Erkenntnis zugrunde, dass bei gleicher Wärmeleistung des Wärmeübertragers 28 die Rücklauftemperatur des Wärmeerzeugers 14 bei höherer Vorlauftemperatur, das heißt, höherem Wärmeerzeuger-Sollwert 126, abnimmt, so dass der Wärmeerzeuger 14 im kondensierenden Bereich betrieben werden kann, was eine effizientere Verbrennung darstellt. Ein höherer festlegbarer Wert 128 führt zu einem höheren Wärmeerzeuger-Sollwert 126.

Falls das Signal 76 positiv ist, das heißt, wenn der Ist-Wert 58 größer als der Warmwasserspeicher-Sollwert 40 ist, wird der Wert 128 von dem konstant hohen Wert 132 linear bis zu einem niedrigen, insbesondere einem minimalen, Wert 134 reduziert. Hierdurch wird eine weitere Energieeinsparung erreicht, da zusätzlich zur Reduktion der Drehzahl der ersten Pumpe 16 auch das Wärmeangebot durch den Wärmeerzeuger 22 reduziert wird. Ein niedrigerer Wärmeerzeuger-Sollwert 126 bedeutet eine geringere Leistung des Wärmeerzeugers 14, und damit einen geringeren Energieverbrauch. Hierdurch wird der gesamte Leistungsbereich des Wärmeerzeugers 14 genutzt, ohne den Wärmeerzeuger 14 zu takten.

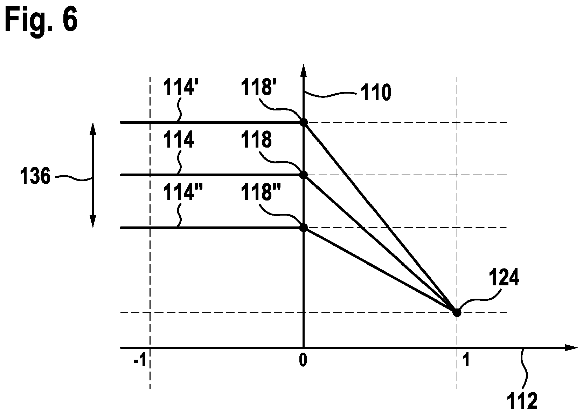

Als eine weitere Erweiterung des erfindungsgemäßen Verfahrens kann zwischen einem Effizienzmodus und einem Komfortmodus gewechselt werden. Hierfür wird ein Wert 136 festgelegt. Der Wert 136 wird verwendet, um die Drehzahl der ersten Pumpe 16 anzupassen, wobei der Wert 136 wie ein skalierender Wert wirkt. Ein höherer Wert 136 entspricht einer höheren Effizienz, wobei hierfür die Drehzahl der ersten Pumpe 16 reduziert wird. Ein niedrigerer Wert 136 entspricht einer Erhöhung der Drehzahl der ersten Pumpe 16, bei Bedarf bis zur maximalen Drehzahl, was zu einer reduzierteren Effizienz führt aber zu einem erhöhten Komfort führt. Dies wird anhand Figur 6 näher erläutert.

Wie in Figur 4 ist die Pumpendrehzahl 110 über dem Signal 76 (x-Achse 112) aufgetragen. Auch hier wurde -1 < Signal < 1 festgelegt. Die Drehzahl der ersten Pumpe 16 ist für ein negatives Signal 76 konstant hoch (Graph 114). Für ein positives Signal 76 wird sie linear auf das Minimum 124 reduziert. Der Pfeil 136 repräsentiert den skalierenden Faktor 136, weswegen ihm dasselbe Bezugszeichen zugeordnet wurde.

Der skalierende Wert 136 entspricht im Ausführungsbeispiel einem Prozentwert. 100% entspricht dem Effizienzmodus, 0% dem Komfortmodus, wobei der skalierende Wert 136 zwischen 0% und 100% frei wählbar ist. Figur 7 veranschaulicht die skalierende Eigenschaft des Wertes 136: Dem Graphen 118 wurde ein skalierender Wert 136 von 50% zugeordnet. Wird ein skalierender Wert 136 von 0% gewählt, so entspricht dies in Figur 6 dem Graphen 114', wobei für ein negatives Signal 76 die Drehzahl der ersten Pumpe 16 auf einem maximalen Wert 118' eingestellt wird. Hierbei sinkt die Effizienz bei gesteigertem Komfort. Für ein positives Signal 76 wird die Drehzahl wieder linear auf den minimalen Wert 124 reduziert. Wird ein skalierender Wert 136 von 100% gewählt, so ist die Effizienz erhöht. Dies entspricht dem Graphen 114" mit dem Maximum 118". Wie zu sehen ist, ist das Maximum 118' größer als das Maximum 118, welches wiederum größer als das Maximum 118" ist. Das heißt, im Komfortmodus (der skalierende Wert 136 ist 0%) ist die Drehzahl der ersten Pumpe 16 am höchsten. Im Vordergrund steht die schnelle Bereitstellung von warmem Wasser, nicht die Energieeffizienz. Im Effizienzmodus (der skalierende Wert 136 ist 100%) ist die Drehzahl der ersten Pumpe 16 am geringsten, wobei die Effizienz am höchsten ist. Hier steht die effiziente Bereitstellung von warmem Wasser im Vordergrund.

Die Effizienz kann durch einen weiteren Schritt innerhalb des Verfahrens weiter gesteigert werden. Üblicherweise ist die Schichtung des Warmwasserspeichers 22 derart, dass das Wasser im oberen Bereich heiß und im unteren Bereich kalt ist. Die Temperatur im unteren Bereich liegt hierbei deutlich unter dem Warmwasserspeicher-Sollwert 40. Warmes Wasser wird so lange gezapft, bis der Übergang von kaltem zu warmem Wasser nach oben gewandert ist. Dann wird wieder mit warmem Wasser beladen; aus Komfortgründen wird dies schnell durchgeführt. Innerhalb des erfindungsgemäßen Verfahrens wird die Schichtung des Warmwasserspeichers 22 mit Hinblick auf Energieeffizienz verändert, wobei zugleich ein hoher Komfort möglich ist. Hierbei wird die Schichtgrenze zwischen kaltem und warmem Wasser im unteren Bereich des Warmwasserspeichers 22 gehalten. Hierdurch wird erreicht, dass nur so viel Warmwasser nachgeladen wird, wie benötigt wird, beispielsweise aufgrund einer Zapfung. Dieser Schritt kann auch innerhalb des Komfortmodus durchgeführt werden.

Für diesen Schritt weist der Warmwasserspeicher 22 den dritten Temperatursensor 38 auf, mit welchem ein Ist-Wert, insbesondere eine Ist-Temperatur, des Wassers im unteren Bereich des Warmwasserspeichers 22 bestimmt wird. Falls jedoch der vierte Temperatursensor 39 im mittleren Bereich des Warmwasserspeichers 22 angeordnet ist, so kann auf den dritten Temperatursensor 38 verzichtet werden.

Weiter wird ein Schwellenwert vorgegeben. In diesem Ausführungsbeispiel wird dieser bestimmt aus der Differenz des Warmwasserspeicher-Sollwerts 40 und eines ersten vorgebbaren Hysteresewertes, zum Beispiel 25 Kelvin. Weiter wird ein Grenzwert vorgegeben, der eine Schichtgrenze zwischen kaltem und warmem Wasser repräsentiert. Beispielsweise wird der Grenzwert bestimmt aus der Differenz des Warmwasserspeicher-Sollwerts 40 und eines vorgebbaren zweiten Hysteresewertes, zum Beispiel 5 Kelvin.

Sobald der Ist-Wert am dritten Temperatursensor 38 den zweiten Schwellenwert erreicht oder unterschreitet, wird die Drehzahl der ersten Pumpe 16 erhöht, beispielsweise auf einen maximalen Wert, und auf diesem Wert konstant gehalten. Erreicht der Ist-Wert dann den Grenzwert, so wird die Drehzahl der ersten Pumpe 16 reduziert. Damit wird der Warmwasserspeicher 22 langsamer und somit effizienter beladen. Wie in den Ausführungsbeispielen der Figuren 4 bis 6 kann die Drehzahl linear reduziert werden.

Das Verfahren lässt sich auch auf Systeme mit mehreren Wärmeerzeugern anwenden, wie beispielsweise auf Kaskadensysteme.

## Patentansprüche

1. Verfahren zum Bereitstellen von warmem Wasser, insbesondere von warmem Trinkwasser, mit einer Warmwasseraufbereitungsanlage, welche mindestens einen Wärmeerzeuger (14) und mindestens eine erste Pumpe (16) zur Zirkulation eines Fluids, insbesondere von Wasser, in mindestens einem Primärkreis (12) und mindestens einen Warmwasserspeicher (22) und mindestens eine zweite Pumpe (24) zur Zirkulation eines Fluids, insbesondere von Wasser, insbesondere von Trinkwasser, in mindestens einem Sekundärkreis (20) aufweist, wobei zwischen dem Wärmeerzeuger (14) und dem Warmwasserspeicher (22) mindestens ein Wärmeübertrager (28) angeordnet ist,
- wobei mit der ersten Pumpe (16) das Fluid durch eine Primärseite des Wärmeübertragers (28) gepumpt wird,
- wobei mit der zweiten Pumpe (24) das Fluid durch den Warmwasserspeicher (22) und durch eine Sekundärseite des Wärmeübertragers (28) gepumpt wird,
- wobei die Drehzahl mindestens einer der Pumpen (16, 24) geregelt wird, wobei
- ein Ist-Wert (58) der Temperatur am sekundärseitigen Ausgang (32) des Wärmeübertragers (28) ermittelt wird,
- ein Warmwasserspeicher-Sollwert (40) für eine Temperatur des Warmwasserspeichers (22) für eine Regelungsstrategie vorgegeben oder unter Berücksichtigung einer Regelungsstrategie berechnet wird, die Drehzahl der mindestens einen regelbaren Pumpe (16, 24), insbesondere anhand der Regelungsstrategie, derart geregelt wird, dass der Ist-Wert (58) höher oder gleich dem Warmwasserspeicher-Sollwert (40) ist, wobei die mindestens eine Pumpe (16, 24) bei Bedarf mit reduzierter Drehzahl betrieben wird, **dadurch gekennzeichnet, dass** die Regelungsstrategie darin besteht, in Abhängigkeit des Ist-Werts (58) der Temperatur am sekundärseitigen Ausgang (32) des Wärmeübertragers (28) und des Warmwasserspeicher-Sollwerts (40) ein Signal (76) bereitzustellen, anhand welchem entschieden wird, ob die Drehzahl der mindestens einen Pumpe (16, 24) reduziert wird, wobei weiterhin die Regelungsstrategie darin besteht, dem Signal (76) einen ersten, insbesondere positiven, Wert zuzuweisen, wenn der Ist-Wert (58) größer als der Warmwasserspeicher-Sollwert (40) ist, und dem Signal (76) einen vom ersten verschiedenen zweiten, insbesondere negativen, Wert zuzuweisen, wenn der Ist-Wert (58) kleiner als der Warmwasserspeicher-Sollwert (40) ist, wobei der Wärmeerzeuger (14) ausgeschaltet wird, wenn der Wert des Signals (76) eine positive obere Grenze, insbesondere +1, erreicht oder überschreitet, wobei die Drehzahl der mindestens einen Pumpe (16, 24) weiterhin derart geregelt wird, dass der Ist-Wert (58) höher oder gleich dem Warmwasserspeicher-Sollwert (40) ist, und wobei
- mindestens eine der Pumpen (16, 24) mit reduzierter Drehzahl betrieben wird, sobald der Wert des Signals (76) eine negative untere Grenze, insbesondere -1, erreicht oder unterschreitet.

2. Verfahren nach Anspruch 1, **dadurch gekennzeichnet, dass** die Regelungsstrategie darin besteht, die erste Pumpe (16) mit reduzierter Drehzahl zu betreiben, wenn das Signal (76) dem ersten, insbesondere positiven, Wert entspricht, und die zweite Pumpe (24) mit reduzierter Drehzahl zu betreiben, wenn das Signal (76) dem zweiten, insbesondere negativen, Wert entspricht.

3. Verfahren nach einem der Ansprüche 1 oder 2, **dadurch gekennzeichnet, dass**
- die erste Pumpe (16) mit einer reduzierten, insbesondere einer minimalen, Drehzahl und die zweite Pumpe (24) mit einer erhöhten, insbesondere einer maximalen, Drehzahl betrieben wird, wenn der Wert des Signals (76) die positive obere Grenze erreicht oder überschreitet,
- die erste Pumpe (16) mit einer erhöhten, insbesondere mit einer maximalen, Drehzahl und die zweite Pumpe (24) mit einer reduzierten, insbesondere einer minimalen Drehzahl, betrieben wird, wenn der Wert des Signals (76) die negative untere Grenze erreicht oder unterschreitet.

4. Verfahren nach einem der Ansprüche 1 bis 3, **dadurch gekennzeichnet, dass** ein Wärmeerzeuger-Sollwert (126), insbesondere eine Solltemperatur, für den Wärmeerzeuger (14) bestimmt wird, wobei der Wärmeerzeuger-Sollwert (126) aus dem Warmwasserspeicher-Sollwert (40) und aus einem festlegbaren Wert (128) gebildet wird, welcher abhängig vom Signal (76) ist, wobei insbesondere der Wärmeerzeuger-Sollwert (126) aus der Summe des Warmwasserspeicher-Sollwerts (40) und des festlegbaren Werts (128) gebildet wird.

5. Verfahren nach Anspruch 4, **dadurch gekennzeichnet, dass** der festlegbare Wert (128) konstant, insbesondere maximal, ist, wenn das Signal (76) den zweiten, insbesondere negativen, Wert annimmt, wobei der festlegbare Wert (128) erniedrigt, insbesondere linear erniedrigt, wird, wenn das Signal (76) den ersten, insbesondere positiven, Wert annimmt.

6. Verfahren nach einem der Ansprüche 1 bis 5, **dadurch gekennzeichnet, dass** ein Ist-Wert des Warmwasserspeichers (22), insbesondere ein Ist-Wert einer Temperatur, in einem unteren Bereich des Warmwasserspeichers (22) ermittelt wird, wobei die Drehzahl mindestens einer der Pumpen (16, 24) solange erhöht wird, bis der Ist-Wert einen festlegbaren, weiteren Warmwasserspeicher-Sollwert, insbesondere eine Soll-Temperatur, für den unteren Bereich des Warmwasserspeichers (22) erreicht oder überschreitet.

7. Verfahren nach einem der Ansprüche 1 bis 6, **dadurch gekennzeichnet, dass** die Drehzahl mindestens der ersten Pumpen (16, 24) anhand ihrer maximalen Drehzahl und eines vorgebbaren skalierenden Faktors (136), welcher Werte zwischen 0% und 100% annimmt, bestimmt wird, wobei ein höherer skalierender Faktor (136) einer höheren Effizienz entspricht, wobei insbesondere die bestimmte Drehzahl der maximalen Drehzahl entspricht, wenn der skalierende Faktor (136) den Wert 0% annimmt, und die bestimmte Drehzahl kleiner als die maximale Drehzahl ist, wenn der skalierende Faktor (136) größer als 0% ist, sodass eine geringere Drehzahl der ersten Pumpe zu einem geringeren Wasservolumenstrom im Primärkreis führt, welches effizienzsteigernd ist.

## Claims

1. Method for providing warm water, in particular warm drinking water, by way of a warm water treatment installation, which has at least one heat generator (14) and at least one first pump (16) for circulating a fluid, in particular water, in at least one primary circuit (12), and has at least one warm water store (22) and at least one second pump (24) for circulating a fluid, in particular water, in particular drinking water, in at least one secondary circuit (20), wherein at least one heat exchanger (28) is arranged between the heat generator (14) and the warm water store (22),
- wherein the fluid is pumped (16) through a primary side of the heat exchanger (28) by the first pump,
- wherein the fluid is pumped (24) through the warm water store (22) and through a secondary side of the heat exchanger (28) by the second pump,
- wherein the rotational speed of at least one of the pumps (16, 24) is regulated,
wherein
- an actual value (58) of the temperature at the secondary-side outlet (32) of the heat exchanger (28) is determined,
- a warm water store target value (40) for a temperature of the warm water store (22) is predefined for a regulation strategy or is calculated with a regulation strategy taken into consideration,
the rotational speed of the at least one regulable pump (16, 24) is regulated, in particular on the basis of the regulation strategy, such that the actual value (58) is greater than or equal to the warm water store target value (40), wherein, if required, the at least one pump (16, 24) is operated at reduced rotational speed, **characterized in that** the regulation strategy is to provide, in dependence on the actual value (58) of the temperature at the secondary-side outlet (32) of the heat exchanger (28) and on the warm water store target value (40), a signal (76) on the basis of which a decision is made as to whether the rotational speed of the at least one pump (16, 24) is reduced, wherein, furthermore, the regulation strategy is to assign a first, in particular positive, value to the signal (76) if the actual value (58) is greater than the warm water store target value (40), and to assign a second, in particular negative, value, which differs from the first value, to the signal (76) if the actual value (58) is less than the warm water store target value (40), wherein the heat generator (14) is switched off if the value of the signal (76) reaches or exceeds a positive upper limit, in particular +1, wherein the rotational speed of the at least one pump (16, 24) is furthermore regulated such that the actual value (58) is greater than or equal to the warm water store target value (40), and wherein
- at least one of the pumps (16, 24) is operated at reduced rotational speed as soon as the value of the signal (76) reaches or falls below a negative lower limit, in particular -1.

2. Method according to Claim 1, **characterized in that** the regulation strategy is to operate the first pump (16) at reduced rotational speed if the signal (76) corresponds to the first, in particular positive, value, and to operate the second pump (24) at reduced rotational speed if the signal (76) corresponds to the second, in particular negative, value.

3. Method according to either of Claims 1 and 2, **characterized in that**
- the first pump (16) is operated at a reduced, in particular a minimum, rotational speed, and the second pump (24) is operated at an increased, in particular a maximum, rotational speed, if the value of the signal (76) reaches or exceeds the positive upper limit,
- the first pump (16) is operated at an increased, in particular at a maximum, rotational speed, and the second pump (24) is operated at a reduced, in particular a minimum, rotational speed, if the value of the signal (76) reaches or falls below the negative lower limit.

4. Method according to one of Claims 1 to 3, **characterized in that** a heat generator target value (126), in particular a target temperature, for the heat generator (14) is determined, wherein the heat generator target value (126) is formed from the warm water store target value (40) and from a settable value (128) which is dependent on the signal (76), wherein, in particular, the heat generator target value (126) is formed from the sum of the warm water store target value (40) and the settable value (128) .

5. Method according to Claim 4, **characterized in that** the settable value (128) is constant, in particular a maximum, if the signal (76) assumes the second, in particular negative, value, wherein the settable value (128) is decreased, in particular linearly decreased, if the signal (76) assumes the first, in particular positive, value.

6. Method according to one of Claims 1 to 5, **characterized in that** an actual value of the warm water store (22), in particular an actual value of a temperature, is determined in a lower region of the warm water store (22), wherein the rotational speed of at least one of the pumps (16, 24) is increased until the actual value reaches or exceeds a settable further warm water store target value, in particular a target temperature, for the lower region of the warm water store (22).

7. Method according to one of Claims 1 to 6, **characterized in that** the rotational speed of at least the first pumps (16, 24) is determined on the basis of the maximum rotational speed thereof and a predefinable scaling factor (136) which assumes values between 0% and 100%, wherein a higher scaling factor (136) corresponds to a higher efficiency, wherein, in particular, the determined rotational speed corresponds to the maximum rotational speed if the scaling factor (136) assumes the value 0%, and the determined rotational speed is less than the maximum rotational speed if the scaling factor (136) is greater than 0%, so that a lower rotational speed of the first pump leads to a lower water volume flow rate in the primary circuit, which increases efficiency.

## Revendications

1. Procédé de production d'eau chaude, en particulier d'eau chaude potable, au moyen d'une installation de préparation d'eau chaude qui comprend au moins un générateur de chaleur (14) et au moins une première pompe (16) destinée à faire circuler un fluide, en particulier d'eau, dans au moins un circuit primaire (12) et au moins un accumulateur d'eau chaude (22) et au moins une deuxième pompe (24) destinée à faire circuler un fluide, en particulier de l'eau, en particulier de l'eau potable, dans au moins un circuit secondaire (20), au moins un échangeur de chaleur (28) étant disposé entre le générateur de chaleur (14) et l'accumulateur d'eau chaude (22),
- le fluide étant pompé à travers un côté primaire de l'échangeur de chaleur (28) au moyen de la première pompe (16),
- le fluide étant pompé à travers l'accumulateur d'eau chaude (22) et à travers un côté secondaire de l'échangeur de chaleur (28) au moyen de la deuxième pompe (24),
- la vitesse de rotation d'au moins une des pompes (16, 24) étant réglée,
- une valeur réelle (58) de la température étant déterminée à la sortie côté secondaire (32) de l'échangeur de chaleur (28),
- une valeur de consigne (40) d'une température de l'accumulateur d'eau chaude (22) étant spécifiée pour une stratégie de régulation ou calculée avec prise en compte d'une stratégie de régulation, la vitesse de rotation de l'au moins une pompe réglable (16, 24) étant ainsi réglée, notamment sur la base de la stratégie de régulation, de telle sorte que la valeur réelle (58) soit supérieure ou égale à la la valeur de consigne (40) de l'accumulateur d'eau chaude, l'au moins une pompe (16, 24) fonctionnant à vitesse de rotation réduite selon le besoin, **caractérisé en ce que** la stratégie de régulation consiste à produire un signal (76) en fonction de la valeur réelle (58) de la température à la sortie côté secondaire (32) de l'échangeur de chaleur (28) et de la valeur de consigne (40) de l'accumulateur d'eau chaude, signal à partir duquel il est décidé si la vitesse de rotation de l'au moins une pompe (16, 24) est réduite, la stratégie de régulation consistant en outre à affecter au signal (76) une première valeur, notamment positive,
si la valeur réelle (58) est supérieure à la valeur de consigne (40) de l'accumulateur d'eau chaude et à affecter au signal (76) une deuxième valeur, notamment négative, différente de la première, si la valeur réelle (58) est inférieure à la valeur de consigne (40) de l'accumulateur d'eau chaude, le générateur de chaleur (14) étant désactivé lorsque la valeur du signal (76) atteint une limite supérieure positive, notamment +1, ou devient supérieure à celle-ci, la vitesse de rotation de l'au moins une pompe (16, 24) étant en outre réglée de telle sorte que la valeur réelle (58) soit supérieure ou égale à la valeur de consigne (40) de l'accumulateur d'eau chaude, et
- au moins une des pompes (16, 24) fonctionnant à vitesse de rotation réduite dès que la valeur du signal (76) atteint une limite inférieure négative, notamment -1, ou devient inférieure à celle-ci.

2. Procédé selon la revendication 1, **caractérisé en ce que** la stratégie de régulation consiste à faire fonctionner la première pompe (16) à vitesse de rotation réduite lorsque le signal (76) correspond à la première valeur, notamment positive, et à faire fonctionner la deuxième pompe (24) à une vitesse de rotation réduite lorsque le signal (76) correspond à la deuxième valeur, notamment négative.

3. Procédé selon l'une des revendications 1 ou 2, **caractérisé en ce que**
- la première pompe (16) fonctionne à une vitesse de rotation réduite, en particulier minimale, et la deuxième pompe (24) fonctionne à une vitesse de rotation accrue, notamment maximale, lorsque la valeur du signal (76) atteint la limite supérieure positive, ou devient supérieure à celle-ci,
- la première pompe (16) fonctionne à une vitesse de rotation accrue, en particulier maximale, et la deuxième pompe (24) fonctionne à une vitesse de rotation réduite, en particulier minimale, lorsque la valeur du signal (76) atteint la limite inférieure négative ou devient inférieure à celle-ci.

4. Procédé selon l'une des revendications 1 à 3, **caractérisé en ce qu'**une valeur de consigne (126), en particulier une température souhaitée, du générateur de chaleur (14) est déterminée, la valeur de consigne (126) du générateur de chaleur étant formée à partir de la valeur de consigne (40) de l'accumulateur d'eau chaude et d'une valeur réglable (128) qui dépend du signal (76), la valeur de consigne (126) du générateur de chaleur étant en particulier formée à partir de la somme de la valeur de consigne (40) de l'accumulateur d'eau chaude et de la valeur définissable (128).

5. Procédé selon la revendication 4, **caractérisé en ce que** la valeur définissable (128) est constante, notamment maximale, lorsque le signal (76) prend la deuxième valeur, notamment négative, la valeur définissable (128) étant diminuée, en particulier linéairement, lorsque le signal (76) prend la première valeur, notamment positive.

6. Procédé selon l'une des revendications 1 à 5, **caractérisé en ce qu'**une valeur réelle (22) de l'accumulateur d'eau chaude, en particulier une valeur réelle d'une température, est déterminée dans une zone inférieure de l'accumulateur d'eau chaude (22), la vitesse de rotation d'au moins une des pompes (16, 24) étant augmentée jusqu'à ce que la valeur réelle atteigne une valeur de consigne définissable supplémentaire, en particulier une température de consigne, de la région inférieure de l'accumulateur d'eau chaude (22) ou devienne supérieure à celle-ci.

7. Procédé selon l'une des revendications 1 à 6, **caractérisé en ce que** la vitesse de rotation au moins de la première pompe (16, 24) est déterminée sur la base de sa vitesse de rotation maximale et d'un facteur d'échelle définissable (136) qui prend des valeurs comprise entre 0 % et 100 %, un facteur d'échelle (136) plus élevé correspondant à un plus grand rendement, la vitesse de rotation déterminée correspondant en particulier à la vitesse de rotation maximale lorsque le facteur d'échelle (136) prend la valeur 0 % et la vitesse de rotation déterminée étant inférieure à la vitesse de rotation maximale lorsque le facteur d'échelle (136) est supérieur à 0 % de sorte qu'une vitesse de rotation plus faible de la première pompe entraîne un débit d'eau plus faible dans le circuit primaire, ce qui améliore le rendement.
